# EUROPÄISCHE PATENTSCHRIFT

(11) **EP 4 406 719 B1**
(45) Veröffentlichungstag und Bekanntmachung des Hinweises auf die Patenterteilung: **17.12.2025**
(21) Anmeldenummer: 24153419.7
(22) Anmeldetag: 23.01.2024
(51) Int. Cl.: B29C 45/18, B29C 48/285

(54) **MATERIALFÖRDERVORRICHTUNG**
MATERIAL CONVEYING DEVICE
DISPOSITIF DE TRANSPORT DE MATÉRIAU

(30) Priorität: 26.01.2023 AT 500392023
(43) Veröffentlichungstag der Anmeldung: 31.07.2024
(73) Patentinhaber: ACH Solution GmbH, 4652 Fischlham (AT)
(72) Erfinder: Hefner, Christian, 4652 Fischlham (AT)
(74) Vertreter: Babeluk Patentanwälte GmbH

(56) Entgegenhaltungen:
- DE-A1- 2 166 208
- US-A- 5 259 749
- US-A- 5 662 415

## Beschreibung

Die Erfindung betrifft eine Materialfördervorrichtung zum Beschicken zumindest einer Spritzgieß- und/oder Extrudiereinheit mit einem nicht freifließendem oder zähfließenden Fördermaterial, mit einem relativ zu einer Konsole um eine Drehachse drehbaren Einfülltrichter und einer entlang einer Mantelinnenfläche des Einfülltrichters drehbar in einem Schneckenschacht der Konsole angeordneten Förderschnecke, welche ausgebildet ist um das Fördermaterial vom Einfülltrichter zu einem Austritt zu fördern, wobei der Schneckenschacht mit einem Trichterausgang des Einfülltrichters verbunden ist, und wobei die Förderschnecke - vorzugsweise auch der Einfülltrichter - über zumindest eine Antriebsvorrichtung antreibbar ist/ sind. Weiters betrifft die Erfindung ein Verfahren zum Beschicken zumindest einer Spritzgieß- und/oder Extrudiereinheit mit einem nicht freifließendem oder zähfließenden Material, mit einer Materialfördervorrichtung mit einem - insbesondere rotierbaren - Einfülltrichter mit einem um eine Rotrationsachse drehbaren und einer entlang einer Mantelinnenfläche des Einfülltrichters angeordneten Förderschnecke, welche drehbar gelagert ist, wobei die Förderschnecke - insbesondere auch der Einfülltrichter - über zumindest eine Antriebsvorrichtung angetrieben wird/werden.

Materialfördervorrichtungen in der genannten Art mit jeweils rotierendem kegelförmigen Einfülltrichter und einer entlang einer Mantellinie drehbar gelagerten Förderschnecke sind aus den Druckschriften EP 0 286 972 A2, EP 0 470 510 A2, EP 0 687 543 A2, EP 1 317 009 A2, DE 10 2019 115 122 A1 und WO 2014/198 503 A1 bekannt.

Die US 5,662,415 A offenbart eine Materialfördervorrichtung für die Verarbeitung und Entgasung einer Materialmischung zur Herstellung von Produkten mit festen Oberflächen. Die Materialfördervorrichtung weist eine Förderschnecke auf, die in einem Anfangsbereich konisch geformt ist. In diesen konischen Bereich der Förderschnecke mündet ein Einlass ein, welcher von einer Materialquelle, beispielsweise einem Mischer ausgeht. Am Ende der Förderschnecke ist ein Materialaustritt angeordnet. In den zylindrischen Endbereich der Förderschnecke kann ein Katalysatormaterial über einen Einlass zugeführt werden. Ein um eine Achse drehbarer Einfülltrichter ist nicht vorgesehen.

Die DE 2 166 208 A1 offenbart eine Spritzgussmaschine mit einem Medienzuführkanal für ein zusätzliches Medium, der in einen Schneckenschacht einer Förderschnecke einmündet. Auch hier ist weder ein drehbarer Einfülltrichter noch ein Schneckenschacht entlang einer Mantellinie des Trichters vorgesehen.

Wenn Produkte mit unterschiedlichen Materialeigenschaften, wie zum Beispiel Farben, Zähigkeit, Elastizität, etc. hergestellt werden sollen, so war es bisher erforderlich für unterschiedliche Materialeigenschaften unterschiedliche Fördermaterialien zu besorgen, zu lagern und zu verarbeiten, was sich nachteilig auf den logistischen Aufwand und die Herstellungskosten auswirkte.

Aufgabe der Erfindung ist es, diese Nachteile zu vermeiden und die Förderung von Fördermaterialien mit unterschiedlichen Eigenschaften auf einfache Weise zu ermöglichen.

Erfindungsgemäß wird dies bei einer Materialfördervorrichtung der eingangs genannten Art dadurch erreicht, dass in den Schneckenschacht zumindest ein Medienzuführkanal einmündet, welcher ausgebildet ist, um dem Fördermaterial zumindest ein zusätzliches Medium zuzuführen, wobei im Bereich der Förderschnecke und/oder stromabwärts der Förderschnecke zumindest eine Mischvorrichtung angeordnet ist, welche ausgebildet ist, um das Fördermaterial und das zusätzliche Medium zu vermischen.

Vorzugsweise ist die Mündung des Medienzuführkanals in den Schneckenschacht zwischen dem Trichterausgang und einem dem Austritt zugewandten Ende der Förderschnecke angeordnet.

Über den Medienzuführkanal kann dem nicht freifließendem oder zähfließendem Fördermaterial aktiv zumindest ein flüssiges, teigiges oder rieselfähiges Medium, beispielsweise ein Vernetzer; ein Silikonöl und/oder Farbmaterial - insbesondere zumindest eine Farbpaste - zugeführt werden. Dabei ist es möglich mehrere Medien gleichzeitig oder abwechselnd zuzuführen, wobei vorzugsweise für jedes Medium ein eigener Medienzuführkanal vorgesehen sein kann. So kann beispielsweise über einen Medienzuführkanal ein Silikonöl und über einen weiteren Medienzuführkanal ein Farbmaterial zugeführt werden.

Mittels der Mischvorrichtung wird eine gute Vermischung des Fördermaterials mit dem zugeführten Medium erzielt.

Um eine homogene Zusammensetzung des geförderten Materials zu erreichen, ist es vorteilhaft, wenn die Mischvorrichtung im Schneckenschacht - vorzugsweise im Bereich des Endes der Förderschnecke - angeordnet ist.

Eine Ausführungsvariante der Erfindung sieht vor, dass die Mischvorrichtung zumindest eine insbesondere kreisförmige Mischscheibe aufweist, wobei vorzugsweise die Mischscheibe zumindest eine Ausnehmung am Umfang und/oder zumindest eine Bohrung aufweist. Versuche haben gezeigt, dass auf diese Weise eine gute Durchmischung ermöglicht wird. Die Größe der Ausnehmungen und Bohrungen kann günstigerweise auf die Viskosität des Fördermaterials und des zugeführten Mediums ausgelegt sein.

Gemäß einer Weiterbildung der Erfindung weist die Mischvorrichtung zumindest zwei axial voneinander beabstandete Mischscheiben aufweist, wobei zwischen den beiden Mischscheiben ein schneckenförmiges Mischelement angeordnet ist.

Eine gute Durchmischung kann erreicht werden, wenn zumindest eine Mischscheibe der Mischvorrichtung mit der Förderschnecke drehfest verbunden ist. Alternativ oder zusätzlich kann vorgesehen sein, dass zumindest eine Mischscheibe der Mischvorrichtung schwimmend mit der Förderschnecke verbunden ist. Schwimmend bedeutet in diesem Zusammenhang, dass die Mischscheibe lose bzw. drehbar mit der Förderschnecke verbunden ist. Die Mischscheibe kann somit von der Förderschnecke lose mitgedreht werden, ist aber nicht an die Förderschnecke drehgebunden.

Das Fördermaterial und das zumindest eine zusätzliche Medium wird durch die Bohrungen und/oder Ausnehmungen der Mischscheibe gepresst und geknetet, wodurch eine gute Durchmischung des Fördermaterials mit dem Zusatzmedium erfolgt.

Um eine gleichmäßige Anreicherung des Fördermaterials mit dem zugeführten Medium zu erreichen, ist es vorteilhaft, wenn zumindest ein zusätzliches Medium in Abhängigkeit zumindest eines Förderparameters der Materialfördervorrichtung zuführbar ist.

In einer Ausführungsvariante der Erfindung ist vorgesehen, dass zumindest ein Förderparameter ein aktueller Volumenstrom oder Massenstrom des aus dem Austritt austretenden Fördermaterials ist. Der Volumenstrom oder Massenstrom kann beispielsweise am Austritt durch eine geeignete Volumenstrom- oder Massenstrommesseinrichtung ermittelt werden. Alternativ oder zusätzlich ist es möglich den Volumenstrom oder Massenstrom aus der Drehzahl der Förderschnecke zu ermitteln.

Genauso ist es möglich, dass zumindest ein Förderparameter durch die Drehzahl der Förderschnecke gebildet ist und zumindest ein zusätzliches Medium in Abhängigkeit zumindest eines Förderparameters der Materialfördervorrichtung zuführbar ist. Für die Ermittlung der Drehzahl kann ein üblicher Drehzahlgeber verwendet werden.

Alternativ oder zusätzlich kann vorgesehen sein, dass zumindest ein Förderparameter eine Stromaufnahme der durch einen Elektromotor gebildeten Antriebsvorrichtung der Förderschnecke ist, wobei vorzugsweise die Stromaufnahme durch eine Auswerteeinrichtung ermittelbar ist.

Eine Ausführungsvariante der Erfindung sieht vor, dass die Förderschnecke über eine erste Antriebsvorrichtung und der Einfülltrichter über eine zweite Antriebsvorrichtung antreibbar sind, wobei vorzugsweise zumindest eine Antriebsvorrichtung durch einen drehzahlregelbaren Elektromotor gebildet ist.

Vorzugsweise weist die Materialfördervorrichtung zumindest eine elektronische Steuereinheit auf, welche ausgebildet ist, um die Zufuhr des zusätzlichen Mediums in Abhängigkeit des zumindest einen Förderparameters zu steuern.

Zur Lösung der gestellten Aufgabe ist erfindungsgemäß ein Verfahren vorgesehen, welches vorsieht, dass dem nicht freifließendem oder zähfließenden Fördermaterial ein zusätzliches Medium im Bereich der Förderschnecke - vorzugsweise zwischen dem Trichterausgang und dem dem Austritt zugewandten Ende der Förderschnecke - zugeführt wird.

Günstigerweise werden das Fördermaterial und das zusätzliche Medium - vorzugsweise im Schneckenschacht - vermischt.

Um eine gleichmäßige Zumischung zu erreichen, ist in einer Ausführungsvariante der Erfindung vorgesehen, dass das zusätzliche Medium in Abhängigkeit zumindest eines Förderparameters der Materialfördervorrichtung zugeführt wird.

Gemäß einer Ausführungsvariante wird als zumindest ein Förderparameter eine Menge oder ein Gewicht des aktuell geförderten Fördermaterials gewählt, wobei vorzugsweise die Menge oder das Gewicht des geförderten Fördermaterials durch ein Dosiervolumen oder Schussgewicht eines Spritzgießwerkzeugs der Spritzgieß- und/oder Extrudiereinheit definiert wird.

Alternativ oder zusätzlich kann vorgesehen sein, dass als zumindest ein Förderparameter ein Volumenstrom oder Massenstrom des aus der Materialfördervorrichtung austretenden Fördermaterials gewählt wird, wobei besonders vorzugsweise der Volumenstrom oder der Massenstrom des Fördermaterials am Austritt aus der Materialfördervorrichtung gemessen wird.

Eine weitere Ausführungsvariante der Erfindung sieht vor, dass als zumindest ein Förderparameter die Drehzahl der Förderschnecke gewählt wird, wobei vorzugsweise die Drehzahl der Förderschnecke gemessen wird.

Weiters kann - alternativ oder zusätzlich - vorgesehen sein, dass als zumindest ein Förderparameter ein Aufnahmestrom der Antriebsvorrichtung der Förderschnecke gewählt wird, wobei vorzugsweise der Aufnahmestrom durch eine Auswerteeinrichtung erfasst wird.

Im Rahmen der Erfindung ist weiters vorgesehen, dass die Förderschnecke nach Erreichen einer gewünschten Dosiermenge mit einer einstellbaren Nachlaufzeit als dynamischer Mischer betrieben wird. Dadurch kann die Durchmischung des Fördermaterials mit dem zusätzlichen Medium verbessert werden.

Die Erfindung wird im Folgenden anhand der in den Figuren gezeigten nicht einschränkenden Ausführungsbeispielen näher erläutert. Darin zeigen schematisch:
- Fig. 1: eine erfindungsgemäße Materialfördervorrichtung in einer Ausführungsvariante in einem Längsschnitt gemäß der Linie I - I in Fig. 2;
- Fig. 2: die Materialfördervorrichtung in einer Seitenansicht;
- Fig. 3: ein Detail dieser Materialfördervorrichtung; und
- Fig. 4: ein Detail der Materialfördervorrichtung in einer weiteren Ausführungsvariante.

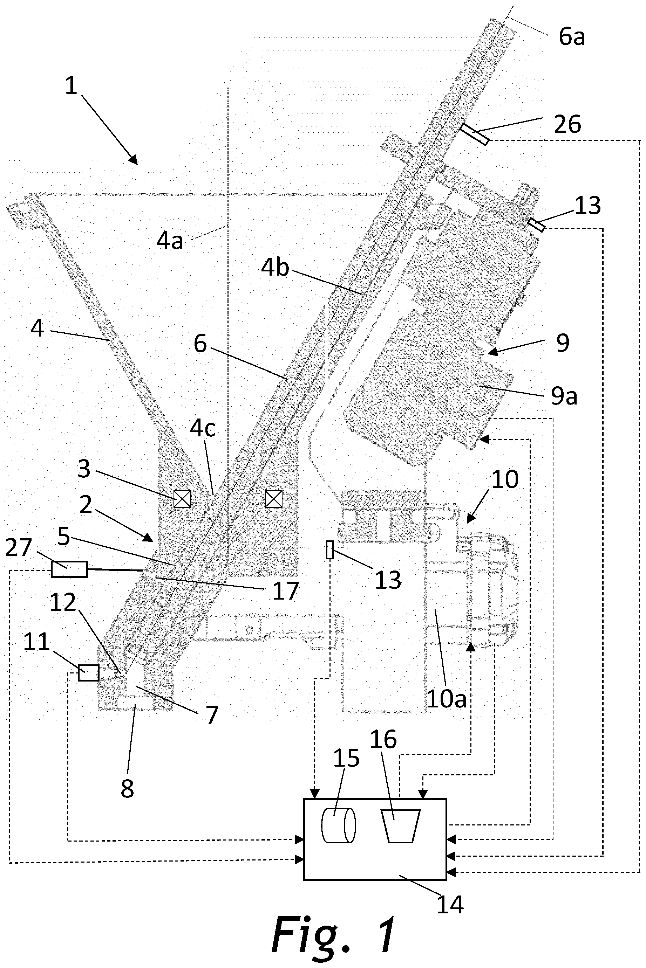

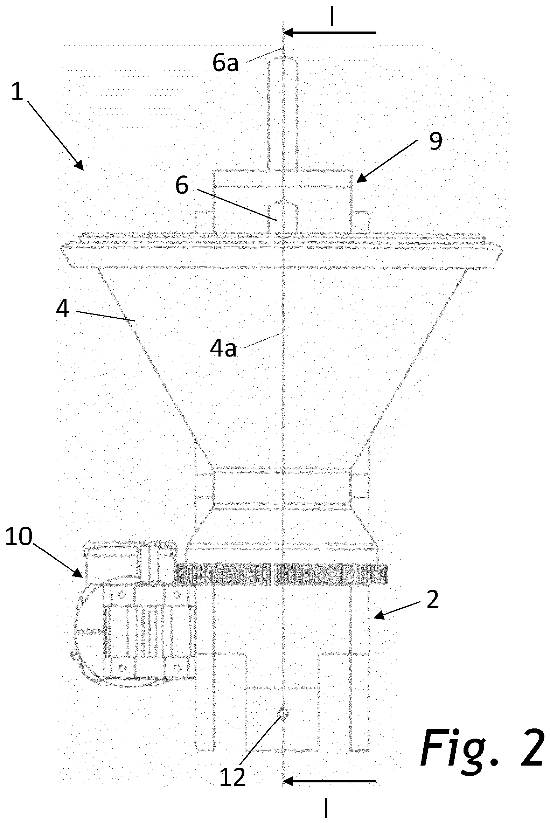

Die Fig. 1 und Fig. 2 zeigen eine erfindungsgemäße Materialfördervorrichtung 1 zum geregelten Zuführen eines nicht freifließendem oder zähfließenden, insbesondere plastifizierbaren Material, beispielsweise HTV (Festsilikon), Polyester-PMC, Gummi und andere "teigige" Materialien, an eine Spritzgieß- und/oder Extrudiereinheit.

Die Materialfördervorrichtung 1 weist eine feststehende Konsole 2 auf, auf welcher über zumindest ein durch Bezugszeichen 3 angedeutetes Drehlager ein Einfülltrichter 4 drehbar um eine Drehachse 4a gelagert ist. Entlang einer Mantelinnenfläche 4b des Einfülltrichters 4 ist in einem Schneckenschacht 5 der Konsole 2 eine Förderschnecke 6 um eine Rotationsachse 6a drehbar angeordnet, wobei der Schneckenschacht 5 mit einem Trichterausgang 4c des Einfülltrichters 4 verbunden ist. Die Förderschnecke 6 ist ausgebildet, um das nicht freifließende oder zähfließende Fördermaterial aus dem Einfülltrichter 4 über einen Austrittskanal 7 zu einem Austritt 8 der Konsole 2 zu fördern. Die Förderschnecke 6 wird im gezeigten Ausführungsbeispiel über eine erste Antriebsvorrichtung 9 und der Einfülltrichter 4 über eine zweite Antriebsvorrichtung 10 angetrieben. Die Antriebsvorrichtungen 9, 10 sind durch beispielsweise drehzahlregelbare Elektromotoren gebildet.

Im Bereich des Austrittes 8 ist im in Fig. 1 dargestellten Beispiel ein Druckaufnehmer 11 in einer mit dem Austrittskanal 7 verbundenen Bohrung 12 angeordnet.

Mit Bezugszeichen 13 ist ein im Antriebsweg der Förderschnecke 6 und/oder im Antriebsweg des Einfülltrichters 4 angeordneter Drehmomentaufnehmer bezeichnet.

Die Materialfördervorrichtung 1 weist eine elektronische Steuereinheit 14 auf, welche ausgebildet ist, um die Zufuhr zumindest eines zusätzlichen Mediums durch zumindest einen Medienzuführkanal 17 in Abhängigkeit zumindest eines Förderparameters zu steuern, wie im Folgenden noch erläutert wird.

Zusätzlich kann die elektronische Steuereinheit 14 ausgebildet sein, um zumindest eine Antriebsvorrichtung 9, 10 und/oder zumindest eine - in Fig. 1 und Fig. 2 nicht weiter dargestellte - Wellenkupplung im Antriebsstrang zwischen Antriebsvorrichtung 9 und Förderschnecke 6 und/oder zwischen Antriebsvorrichtung 10 und Einfülltrichter 4 zu steuern. Die elektronische Steuereinheit 14 ist dabei - je nach Ausführung - mit zumindest einer Antriebsvorrichtung 9, 10 und/oder Wellenkupplung und/oder einem Drucksensor 11 und/oder einem Drehmomentsensor 13 verbunden. In die elektronische Steuereinheit 14 ist beispielsweise eine Speichereinrichtung 15 zur Speicherung eines definierten Grenzwerts des Betriebsparameters und eine Vergleichs- und Auswerteeinrichtung 16 integriert, um einen aktuellen Betriebsparameter mit dem definierten Grenzwert des Betriebsparameters zu vergleichen. Die elektronische Steuereinheit 14 ist ausgebildet, um den Antrieb des Einfülltrichters 4 zu vermindern oder zu unterbrechen, wenn der definierte Grenzwert des Betriebsparameters erreicht oder überschritten wird. Zumindest ein Betriebsparameter kann durch das Antriebsmoment der Förderschnecke 6 oder des Einfülltrichters 4, den Förderdruck der Materialfördervorrichtung 1 oder die Stromaufnahme zumindest einer durch einen Elektromotor gebildeten Antriebsvorrichtung 9, 10 - beispielsweise der ersten Antriebsvorrichtung 9 für die Förderschnecke 6 - gebildet sein.

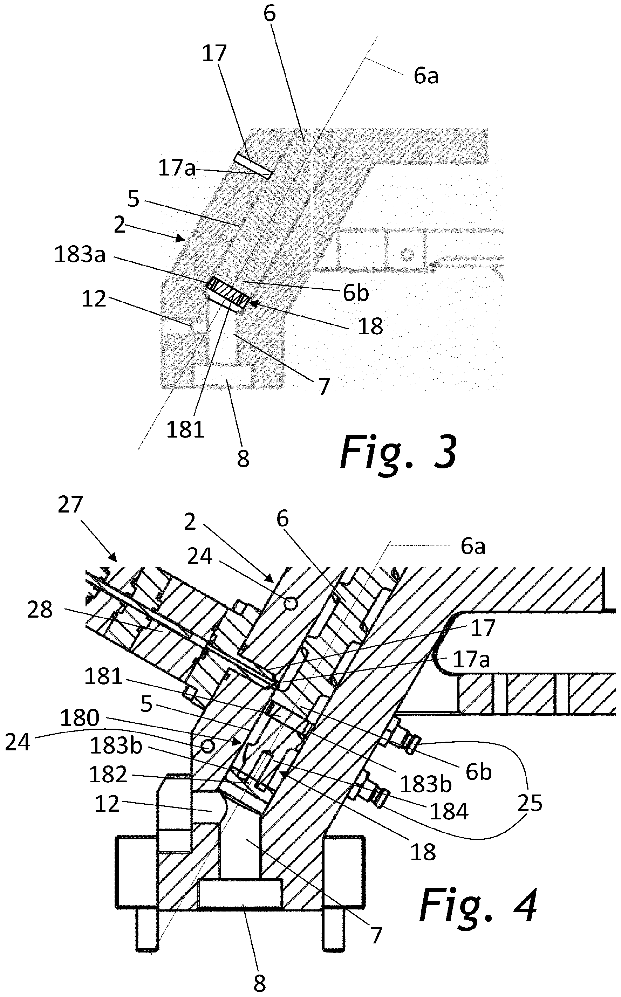

Fig. 3 zeigt ein Detail der Materialfördervorrichtung 1 aus Fig. 1.

Wie insbesondere aus Fig. 3 ersichtlich ist, weist die Konsole 2 zumindest einen in den Schneckenschacht 5 einmündenden Medienzuführkanal 17 auf. Die Mündung 17a des Medienzuführkanals 17 in den Schneckenschacht 5 ist günstigerweise zwischen dem Trichterausgang 4c des Einfülltrichters 4 und dem Ende 6b der Förderschnecke 6 angeordnet, welches dem Austrittskanal 7 bzw. dem Austritt 8 zugewandt ist.

Über den Medienzuführkanal 17 kann dem nicht freifließendem oder zähfließendem Fördermaterial aktiv zumindest ein flüssiges, teigiges oder rieselfähiges Medium, beispielsweise zumindest ein Vernetzer, zumindest ein Silikonöl und/oder zumindest ein Farbmaterial - insbesondere zumindest eine Farbpaste - zugeführt werden. Um eine gute Durchmischung des Mediums mit dem nicht freifließenden oder zähfließenden Fördermaterial zu erreichen, ist im Bereich der Förderschnecke 6 und/oder stromabwärts der Förderschnecke 6 zumindest eine Mischvorrichtung 18 angeordnet, wobei vorzugsweise die Mischvorrichtung 18 im Schneckenschacht 5 - beispielsweise im Bereich des Endes 6b der Förderschnecke 6 - angeordnet ist. Die Mischvorrichtung 18 weist beispielsweise eine mehrere axiale Bohrungen 183a aufweisende Mischscheibe 181 auf. Um die Durchmischung zu verbessern, können auch mehrere Mischscheiben 181, 182 in Förderrichtung hintereinander angeordnet sein. Zumindest eine Mischscheibe 181 kann dabei drehfest und starr mit der Förderschnecke 6 verbunden oder schwimmend an der Förderschnecke 6 befestigt sein. Anstelle von axialen Bohrungen 183a oder zusätzlich zu diesen können Ausnehmungen 183b mit verschiedenen Geometrien am Umfang der Mischscheibe 181 angeordnet sein (siehe Fig. 4).

Fig. 4 zeigt ebenfalls eine Konsole 2 einer Materialfördervorrichtung 1 in einer weiteren erfindungsgemäßen Ausführungsvariante in einem Schnitt analog zu Fig. 3, wobei die Konsole 2 ebenfalls einen in den Schneckenschacht 5 einmündenden Medienzuführkanal 17 aufweist, wobei die Mündung 17a des Medienzuführkanals 17 zwischen dem Trichterausgang 4c des Einfülltrichters 4 und dem Ende 6b der Förderschnecke 6 angeordnet, welches dem Austrittskanal 7 bzw. dem Austritt 8 zugewandt ist. Die Mischvorrichtung 18 ist in Fig. 4 als Mischaufsatz 180 am Ende 6b der Förderschnecke 6 ausgebildet, welcher drehfest mit der Förderschnecke 6 verbunden ist. Der Mischaufsatz 180 weist eine erste Mischscheibe 181 und eine zweite Mischscheibe 182 mit Ausnehmungen 183b am Umfang der jeweiligen Mischscheibe 181, 182 auf, wobei zwischen den Mischscheiben 181, 182 ein schneckenförmiges Mischelement 184 angeordnet ist.

Es ist dabei möglich, die Förderschnecke 6 nach Erreichen einer gewünschten Dosiermenge mit einer einstellbaren Nachlaufzeit als dynamischer Mischer zu betreiben, um die Durchmischung des Fördermaterials mit dem Farbmaterial zu verbessern.

Günstigerweise kann die Medienzuführung durch den zumindest einen Medienzuführkanal 17 in Abhängigkeit von zumindest einem Förderparameter der Materialfördervorrichtung 1, beispielsweise in Abhängigkeit der Drehzahl der Förderschnecke 6 und/oder des Einfülltrichters 4 und/oder der Stromaufnahme Antriebsvorrichtung 9, 10 der Förderschnecke 6 oder des Einfülltrichters 4, erfolgen. Die Drehzahl der Förderschnecke 6 wird beispielsweise über einen Drehzahlaufnehmer 26 gemessen und der Steuereinheit 14 zugeführt, welche daraus einen aktuellen Volumenstrom oder Massenstrom ermittelt. Abhängig von dem ermittelten Volumenstrom oder Massenström des Fördermaterials erfolgt die Zufuhr des zusätzlichen Mediums, indem eine Dosiereinrichtung 27, beispielsweise eine Schneckenförderpumpe oder eine Stößelpumpe 28 (siehe Fig. 4), für das zusätzliche Medium entsprechend durch die Steuereinheit 14 gesteuert wird. Im Falle einer Schneckenförderpumpe wird deren Drehzahl entsprechend durch die Steuereinheit 14 gesteuert. Im Falle einer Stößelpumpe 28 ist durch deren Hub die Menge des zugeführten zusätzlichen Mediums definiert; die Steuereinheit 14 steuert somit die Anzahl der Stößelhübe der Stößelpumpe 28. Der Förderparameter kann unterschiedlich oder gleich dem zum Betreiben des Einfülltrichters 4 verwendeten Betriebsparameter der Materialfördervorrichtung 1 sein. Im Falle einer Anwendung an einem Extruder oder bei einer Spritzgießeinheit kann die Medienzuführung in Abhängigkeit vom Dosiervolumen oder dem Schussgewicht beim Spritzgießwerkzeug erfolgen.

Die Zufuhr beispielsweise eines Farbmaterials separat zum Fördermaterial hat den Vorteil, dass als Fördermaterial ein einheitliches transparentes neutrales Material verwendet werden kann. Es braucht somit nicht mehr für jede verwendete Farbe ein farbiges Fördermaterial auf Lager gelegt werden, wodurch die Lagerkapazität für das Fördermaterial wesentlich reduziert werden kann.

Zur Temperierung des Schneckenschachtes 5 und der Förderschnecke 6 können in der Konsole 2 Kühlbohrungen 24 für ein Kühlmedium vorgesehen sein (Fig. 4). Mit Bezugszeichen 25 sind Anschlüsse für nicht weiter dargestellte Zu- und Abfuhrleitung zur Zu- und Abfuhr des Kühlmediums bezeichnet.

## Patentansprüche

1. Materialfördervorrichtung (1) zum Beschicken zumindest einer Spritzgieß- und/oder Extrudiereinheit mit einem nicht freifließendem oder zähfließenden Fördermaterial, mit einem relativ zu einer Konsole (2) um eine Drehachse (4a) drehbaren Einfülltrichter (4) und einer entlang einer Mantelinnenfläche (4b) des Einfülltrichters (4) drehbar in einem Schneckenschacht (5) der Konsole (2) angeordneten Förderschnecke (6), welche ausgebildet ist um das Fördermaterial vom Einfülltrichter (4) zu einem Austritt (8) zu fördern, wobei der Schneckenschacht (5) mit einem Trichterausgang (4c) des Einfülltrichters (4) verbunden ist, und wobei die Förderschnecke (6) - vorzugsweise auch der Einfülltrichter (4) - über zumindest eine Antriebsvorrichtung (9, 10) antreibbar ist/sind, **dadurch gekennzeichnet, dass** in den Schneckenschacht (5) zumindest ein Medienzuführkanal (17) einmündet, welcher ausgebildet ist, um dem Fördermaterial zumindest ein zusätzliches Medium zuzuführen, wobei im Bereich der Förderschnecke (6) und/oder stromabwärts der Förderschnecke (6) zumindest eine Mischvorrichtung (18) angeordnet ist, welche ausgebildet ist, um das Fördermaterial und das zusätzliche Medium zu vermischen.

2. Materialfördervorrichtung (1) nach Anspruch 1, **dadurch gekennzeichnet, dass** die Mündung (17a) des Medienzuführkanals (17) in den Schneckenschacht (5) zwischen dem Trichterausgang (4c) und einem dem Austritt (8) zugewandten Ende (6b) der Förderschnecke (6) angeordnet ist.

3. Materialfördervorrichtung (1) nach Anspruch 1 oder 2, **dadurch gekennzeichnet, dass** die Mischvorrichtung (18) im Schneckenschacht (5) angeordnet ist.

4. Materialfördervorrichtung (1) nach einem der Ansprüche 1 bis 3, **dadurch gekennzeichnet, dass** die Mischvorrichtung (18) zumindest eine insbesondere kreisförmige Mischscheibe (181, 182) aufweist, wobei vorzugsweise die Mischscheibe (181, 182) zumindest eine Ausnehmung (183b) am Umfang und/oder zumindest eine Bohrung (182a) aufweist.

5. Materialfördervorrichtung (1) nach einem der Ansprüche 1 bis 4, **dadurch gekennzeichnet, dass** die Mischvorrichtung (18) zumindest zwei axial voneinander beabstandete Mischscheiben (181, 182) aufweist, wobei zwischen den beiden Mischscheiben (181, 182) ein schneckenförmiges Mischelement (184) angeordnet ist.

6. Materialfördervorrichtung (1) nach einem der Ansprüche 1 bis 5, **dadurch gekennzeichnet, dass** zumindest eine Mischscheibe (181, 182) der Mischvorrichtung (18) mit der Förderschnecke (6) drehfest verbunden ist.

7. Materialfördervorrichtung (1) nach einem der Ansprüche 1 bis 6, **dadurch gekennzeichnet, dass** zumindest eine Mischscheibe (181, 182) der Mischvorrichtung (18) schwimmend mit der Förderschnecke (6) verbunden ist.

8. Materialfördervorrichtung (1) nach einem der Ansprüche 1 bis 7, **dadurch gekennzeichnet, dass** das zusätzliche Medium in Abhängigkeit zumindest eines Förderparameters der Materialfördervorrichtung (1) zuführbar ist.

9. Materialfördervorrichtung (1) nach Anspruch 8, **dadurch gekennzeichnet, dass** zumindest ein Förderparameter
• eine Menge oder ein Gewicht des aktuell geförderten Fördermaterials ist, wobei vorzugsweise die Menge oder das Gewicht des aktuell geförderten Fördermaterials durch ein Dosiervolumen oder Schussgewicht eines Spritzgießwerkzeugs der Spritzgieß- oder Extrudiereinheit definiert ist, und/oder
• ein aktueller Volumenstrom oder Massenstrom des aus dem Austritt (8) austretenden Fördermaterials ist, und/oder
• eine aktuelle Drehzahl der Förderschnecke (6) ist, wobei vorzugsweise die aktuelle Drehzahl durch zumindest einen im Antriebsweg der Förderschnecke (6) angeordneten Drehzahlaufnehmer (26) ermittelbar ist, und/ oder
• eine aktuelle Stromaufnahme der zumindest einen Elektromotor (9a, 10a) aufweisenden Antriebsvorrichtung (9, 10) der Förderschnecke (6) oder des Einfülltrichters (4) ist, wobei vorzugsweise die Stromaufnahme durch eine Vergleichs- und Auswerteeinrichtung (16) ermittelbar ist.

10. Materialfördervorrichtung (1) nach einem der Ansprüche 1 bis 9, **dadurch gekennzeichnet, dass** die Materialfördervorrichtung (1) zumindest eine elektronische Steuereinheit (14) aufweist, welche ausgebildet ist, um die Zufuhr des zusätzlichen Mediums in Abhängigkeit des zumindest einen Förderparameters zu steuern.

11. Verfahren zum Beschicken zumindest einer Spritzgieß- und/oder Extrudiereinheit mit einem nicht freifließendem oder zähfließenden Material, mit einer Materialfördervorrichtung (1) mit einem rotierbaren Einfülltrichter (4) und einer entlang einer Mantelinnenfläche (4b) des Einfülltrichters (4) drehbar angeordneten Förderschnecke (6), wobei die Förderschnecke (6) - vorzugsweise auch der Einfülltrichter (4) - über zumindest eine Antriebsvorrichtung (9, 10) angetrieben wird/werden, nach einem der Ansprüche 1 bis 10, **dadurch gekennzeichnet, dass** dem nicht freifließendem oder zähfließenden Fördermaterial ein zusätzliches Medium im Bereich der Förderschnecke (6) - vorzugsweise zwischen dem Trichterausgang (4c) und dem dem Austritt (8) zugewandten Ende (6b) der Förderschnecke (6) - zugeführt wird.

12. Verfahren nach Anspruch 11, **dadurch gekennzeichnet, dass** das Fördermaterial und das zusätzliche Medium - vorzugsweise im Schneckenschacht (5) -vermischt werden.

13. Verfahren nach Anspruch 11 oder 12, **dadurch gekennzeichnet, dass** das zusätzliche Medium in Abhängigkeit zumindest eines Förderparameters der Materialfördervorrichtung (1) zugeführt wird.

14. Verfahren nach Anspruch 13, **dadurch gekennzeichnet, dass** als zumindest ein Förderparameter
• eine Menge oder ein Gewicht des geförderten Fördermaterials gewählt wird, wobei vorzugsweise die Menge oder das Gewicht des geförderten Fördermaterials durch ein Dosiervolumen oder Schussgewicht eines Spritzgießwerkzeugs der Spritzgieß- und/oder Extrudiereinheit definiert wird, und/oder
• ein Volumenstrom oder ein Massenstrom des aus der Materialfördervorrichtung austretenden Fördermaterials gewählt wird, wobei vorzugsweise der Volumenstrom oder der Massenstrom des Fördermaterials am Austritt aus der Materialfördervorrichtung (1) gemessen wird, und/oder
• die Drehzahl der Förderschnecke (6) gewählt wird, wobei vorzugsweise die Drehzahl der Förderschnecke (6) gemessen wird, und/oder
• ein Aufnahmestrom der Antriebsvorrichtung (10) der Förderschnecke (6) gewählt wird, wobei vorzugsweise der Aufnahmestrom durch eine Vergleichs- und Auswerteeinrichtung (16) erfasst wird.

15. Verfahren nach einem der Ansprüche 11 bis 14, **dadurch gekennzeichnet, dass** die Förderschnecke (6) nach Erreichen einer gewünschten Dosiermenge mit einer einstellbaren Nachlaufzeit als dynamischer Mischer betrieben wird.

## Claims

1. Material conveying device (1) for feeding at least one injection molding and/or extrusion unit with a non-free-flowing or viscous conveying material, having a feed hopper (4) rotatable relative to a bracket (2) about a rotational axis (4a) and a conveyor screw (6) arranged rotatably along an inner jacket surface (4b) of the feed hopper (4) in a screw shaft (5) of the bracket (2), which is designed to convey the conveying material from the feed hopper (4) to an outlet (8), wherein the screw shaft (5) is connected to a hopper outlet (4c) of the feed hopper (4), and wherein the conveyor screw (6) - and preferably also the feed hopper (4) - can be driven by at least one drive device (9, 10), **characterised in that** at least one media supply channel (17) opens into the screw shaft (5), which is designed to supply at least one additional medium to the conveying material, wherein at least one mixing device (18) is arranged in the region of the conveyor screw (6) and/or downstream of the conveyor screw (6), which is designed to mix the conveying material and the additional medium.

2. Material conveying device (1) according to claim 1, **characterised in that** the opening (17a) of the media supply channel (17) into the screw shaft (5) is arranged between the hopper outlet (4c) and an end (6b) of the conveyor screw (6) facing the outlet (8).

3. Material conveying device (1) according to claim 1 or 2, **characterised in that** the mixing device (18) is arranged in the screw shaft (5).

4. Material conveying device (1) according to one of claims 1 to 3, **characterised in that** the mixing device (18) has at least one mixing disc (181, 182), which is in particular circular, wherein the mixing disc (181, 182) preferably has at least one recess (183b) on the circumference and/or at least one bore (182a).

5. Material conveying device (1) according to one of claims 1 to 4, **characterised in that** the mixing device (18) has at least two mixing discs (181, 182) spaced axially apart from each other, wherein a helical mixing element (184) is arranged between the two mixing discs (181, 182).

6. Material conveying device (1) according to one of claims 1 to 5, **characterised in that** at least one mixing disc (181, 182) of the mixing device (18) is connected to the conveyor screw (6) in a rotationally fixed manner.

7. Material conveying device (1) according to one of claims 1 to 6, **characterised in that** at least one mixing disc (181, 182) of the mixing device (18) is connected to the conveyor screw (6) in a floating manner.

8. Material conveying device (1) according to one of claims 1 to 7, **characterised in that** the additional medium can be supplied depending on at least one conveying parameter of the material conveying device (1).

9. Material conveying device (1) according to claim 8, **characterised in that** at least one conveying parameter
• is a quantity or weight of the conveying material currently being conveyed, wherein the quantity or weight of the conveying material currently being conveyed is preferably defined by a dosing volume or shot weight of an injection molding tool of the injection molding or extrusion unit, and/or
• is a current volume flow or mass flow of the conveying material exiting the outlet (8), and/or
• is a current rotational speed of the conveyor screw (6), wherein the current rotational speed can preferably be determined by at least one rotational speed sensor (26) arranged in the drive path of the conveyor screw (6), and/or
• a current power consumption of the drive device (9, 10) of the conveyor screw (6) or the feed hopper (4) having at least one electric motor (9a, 10a), wherein the power consumption can preferably be determined by a comparison and evaluation device (16).

10. Material conveying device (1) according to one of claims 1 to 9, **characterised in that** the material conveying device (1) has at least one electronic control unit (14) which is designed to control the supply of the additional medium as a function of the at least one conveying parameter.

11. Method for feeding at least one injection molding and/or extrusion unit with a non-free-flowing or viscous material, having a material conveying device (1) with a rotatable feed hopper (4) and a conveyor screw (6) arranged rotatably along an inner jacket surface (4b) of the feed hopper (4), wherein the conveyor screw (6) - preferably also the feed hopper (4) - is/are driven by at least one drive device (9, 10), according to one of claims 1 to 10, **characterised in that** an additional medium is supplied to the non-free-flowing or viscous conveyor material in the region of the conveyor screw (6), preferably between the hopper outlet (4c) and the end (6b) of the conveyor screw (6) facing the outlet (8).

12. Method according to claim 11, **characterised in that** the conveying material and the additional medium are mixed, preferably in the screw shaft (5).

13. Method according to claim 11 or 12, **characterised in that** the additional medium is supplied as a function of at least one conveying parameter of the material conveying device (1).

14. Method according to claim 13, **characterised in that** at least one conveying parameter is selected as
• a quantity or weight of the conveyed conveying material, wherein the quantity or weight of the conveying material is preferably defined by a dosing volume or shot weight of an injection molding tool of the injection molding and/or extrusion unit, and/or
• a volume flow or a mass flow of the conveying material emerging from the material conveying device is selected, wherein the volume flow or the mass flow of the conveying material is preferably measured at the outlet of the material conveying device (1), and/or
• the rotational speed of the conveyor screw (6) is selected, wherein the rotational speed of the conveyor screw (6) is preferably measured, and/or
• an input current of the drive device (10) of the conveyor screw (6) is selected, wherein the input current is preferably detected by a comparison and evaluation device (16).

15. Method according to one of claims 11 to 14, **characterised in that** the conveyor screw (6) is operated as a dynamic mixer with an adjustable follow-up time after a desired dosing quantity has been reached.

## Revendications

1. Dispositif (1) de transport de matière pour l'alimentation d'au moins une unité de moulage par injection et/ou d'extrusion en une matière à transporter ne s'écoulant pas librement ou ne s'écoulant pas de manière visqueuse, comprenant un entonnoir (4) de remplissage tournant par rapport à une console (2) autour d'un axe (4a) de rotation et une vis (6) transporteuse montée tournante, le long d'une surface (4b) intérieure latérale de l'entonnoir (4) de remplissage, dans un puit (5) de vis de la console (2) qui est constituée pour transporter la matière à transporter de l'entonnoir (4) de remplissage à une sortie (8), dans lequel le puit (5) de vis communique avec une sortie (4c) de l'entonnoir (4) de remplissage et dans lequel la vis (6) transporteuse - de préférence également l'entonnoir (4) de remplissage - peut/peuvent être entraînés par au moins un dispositif (9, 10) d'entraînement, **caractérisé en ce que** dans le puit (5) de vis débouche au moins un conduit (17) d'apport de milieux, qui est constitué pour apporter au moins un milieu supplémentaire à la matière à transporter, dans lequel dans la partie de la vis (6) transporteuse et/ou en aval de la vis (6) transporteuse est disposé au moins un dispositif (18) de mélange, qui est constitué pour mélanger la matière à transporter et le milieu supplémentaire.

2. Dispositif (1) de transport de matière suivant la revendication 1, **caractérisé en ce que** l'embouchure (17a) du conduit (17) d'apport de milieux est disposée dans le puit (5) de vis entre la sortie (4c) de l'entonnoir et une extrémité (6b) de la vis (6) convoyeuse tournée vers la sortie (8).

3. Dispositif (1) de transport de matière suivant la revendication 1 ou 2, **caractérisé en ce que** le dispositif (18) de mélange est disposé dans le puit (5) de vis.

4. Dispositif (1) de transport de matière suivant l'une des revendications 1 à 3, **caractérisé en ce que** le dispositif (18) de mélange a au moins un disque (181, 182) de mélange, en particulier de forme circulaire, dans lequel de préférence le disque (181, 182) de mélange a au moins un évidement (183b) sur le pourtour et/ou au moins un trou (182a).

5. Dispositif (1) de transport de matière suivant l'une des revendications 1 à 4, **caractérisé en ce que** le dispositif (18) de mélange a au moins deux disques (181, 182) de mélange à distance axialement l'un de l'autre, dans lequel un élément (184) de mélange en forme de vis est disposé entre les deux disques (181, 182) de mélange.

6. Dispositif (1) de transport de matière suivant l'une des revendications 1 à 5, **caractérisé en ce qu'**au moins un disque (181, 182) de mélange du dispositif (18) de mélange est solidaire en rotation de la vis (6) transporteuse.

7. Dispositif (1) de transport de matière suivant l'une des revendications 1 à 6, **caractérisé en ce qu'**au moins un disque (181, 182) de mélange du dispositif (18) de mélange est relié flottant à la vis (6) transporteuse.

8. Dispositif (1) de transport de matière suivant l'une des revendications 1 à 7, **caractérisé en ce que** le milieu supplémentaire peut être apporté en fonction d'au moins un paramètre de transport du dispositif (1) de transport de matière.

9. Dispositif (1) de transport de matière suivant la revendication 8, **caractérisé en ce qu'**au moins un paramètre de transport
• est une quantité ou un poids de la matière à transporter en cours de transport, dans lequel de préférence la quantité ou le poids de la matière à transporter en cours de transport est défini par un volume de dosage ou par un poids ou une capacité d'injection d'un outil de moulage par injection de l'unité de moulage par injection ou de l'unité d'extrusion et/ou
• est un courant en volume ou un courant massique en cours de la matière à transporter sortant de la sortie (8) et/ou
• est une vitesse de rotation en cours de la vis (6) transporteuse, dans lequel de préférence la vitesse de rotation en cours peut être déterminée par au moins un enregistreur (26) de vitesse de rotation monté dans le chemin d'entraînement de la vis (6) transporteuse et/ou
• est une absorption de courant en cours d'au moins un dispositif (9, 10) d'entraînement, comportant un moteur (9a, 10a) électrique, de la vis (6) transporteuse ou de l'entonnoir (4) de remplissage, dans lequel de préférence l'absorption de courant peut être déterminée par un dispositif (16) de comparaison et d'évaluation.

10. Dispositif (1) de transport de matière suivant l'une des revendications 1 à 9, **caractérisé en ce que** le dispositif (1) de transport de matière a au moins une unité (14) électronique de commande, qui est constituée pour commander l'apport du milieu supplémentaire en fonction du au moins un paramètre de transport.

11. Procédé d'alimentation d'au moins une unité de moulage par injection et/ou d'extrusion en une matière ne s'écoulant pas librement ou ne s'écoulant pas de manière visqueuse, comprenant un dispositif (1) de transport de matière ayant un entonnoir (4) de remplissage tournant et une vis (6) transporteuse montée tournante le long d'une surface (4b) intérieure latérale de l'entonnoir (4) de remplissage, dans lequel la vis (6) transporteuse, de préférence aussi l'entonnoir (4) de remplissage, est/sont entraînés par au moins un dispositif (9, 10) d'entraînement, suivant l'une des revendications 1 à 10, **caractérisé en ce qu'**à la matière à transporter ne s'écoulant pas librement ou ne s'écoulant pas de manière visqueuse on apporte un milieu supplémentaire dans la partie de la vis (6) transporteuse - de préférence entre la sortie (4c) de l'entonnoir et l'extrémité (6b) de la vis (6) transporteuse tournée vers la sortie (8).

12. Procédé suivant la revendication 11, **caractérisé en ce que** l'on mélange la matière à transporter et le milieu supplémentaire - de préférence dans le puit (5) de vis.

13. Procédé suivant la revendication 11 ou 12, **caractérisé en ce qu'**on apporte le milieu supplémentaire en fonction d'au moins un paramètre de transport du dispositif (1) de transport de matière.

14. Procédé suivant la revendication 13, **caractérisé en ce que** comme au moins un paramètre de transport
• on choisit une quantité ou un poids de la matière à transporter en cours de transport, dans lequel de préférence la quantité ou le poids de la matière à transporter en cours de transport est défini par un volume de dosage ou par un poids ou une capacité d'injection d'un outil de moulage par injection de l'unité de moulage par injection ou de l'unité d'extrusion et/ou
• on choisit un courant en volume ou un courant massique de la matière à transporter sortant du dispositif de transport de matière, dans lequel de préférence on mesure le courant en volume ou le courant massique de la matière à transporter à la sortie du dispositif (1) de transport de matière et/ou
• on choisit la vitesse de rotation de la vis (6) transporteuse, dans lequel de préférence on mesure la vitesse de rotation de la vis (6) transporteuse et/ou
• on choisit un courant d'absorption du dispositif (10) d'entraînement de la vis (6) transporteuse, dans lequel on détecte de préférence le courant d'absorption par un dispositif (16) de comparaison et d'évaluation.

15. Procédé suivant l'une des revendications 11 à 14, **caractérisé en ce que** l'on fait fonctionner en mélangeur dynamique la vis (6) transporteuse avec un temps de fonctionnement suivant réglable après avoir atteint une quantité de dosage souhaitée.
